# EUROPÄISCHE PATENTSCHRIFT

(11) **EP 1 291 112 B1**
(45) Veröffentlichungstag und Bekanntmachung des Hinweises auf die Patenterteilung: **27.07.2005**
(21) Anmeldenummer: 02018452.9
(22) Anmeldetag: 16.08.2002
(51) Int. Cl.: B23K 9/29, B23B 31/20, H05H 1/34

(54) **Brenner zum Schweissen und/oder Schneiden**
Torch for welding and/or cutting
Torche pour le soudage et/ou le découpage

(30) Priorität: 07.09.2001 DE 10144036
(43) Veröffentlichungstag der Anmeldung: 12.03.2003
(73) Patentinhaber: Merkle, Wilhelm, 89359 Kötz (DE)
(72) Erfinder: Merkle, Wilhelm, 89359 Kötz (DE)
(74) Vertreter: Munk, Ludwig, Dipl.-Ing.

(56) Entgegenhaltungen:
- DE-A- 4 314 099
- DE-A- 19 642 774
- SU-A- 1 715 513
- US-A- 2 514 060
- US-A- 2 880 302
- US-A- 4 024 374
- US-A- 4 562 329

## Beschreibung

Die Erfindung betrifft einen Brenner zum Schweißen und/oder Schneiden gemäß dem Oberbegriff des Anspruchs 1.

Eine Anordnung dieser Art ist aus der DE 43 14 099 C2 bekannt. Bei dieser bekannten Anordnung ist der gegenseitige Gewindeeingriff zwischen Nadelhalter und Brennerkörper außerhalb der Konusbereiche im Bereich zylindrischer Abschnitte vorgesehen. Die Konusbereiche sind dementsprechend als glatte Konusflächen ausgebildet. Es ergibt sich daher eine vergleichsweise kleine gegenseitige Kontaktfläche, was sich ungünstig auf den erzielbaren Wärmedurchgang und damit die erzielbare Wärmeableitung auswirkt. Außerdem erfordert die zylindrische Gewindeanordnung vergleichsweise viele Umdrehungen, um die beiden miteinander verschraubbaren Teile außer gegenseitigen Gewindeeingriff bringen zu können. Die Trennung zwischen Konusbereichen und Gewindebereichen erfordert zudem auch einen hohen Platzbedarf sowie einen hohen Bearbeitungsaufwand.

Hiervon ausgehend ist es daher die Aufgabe der vorliegenden Erfindung, einen Brenner eingangs erwähnter Art zu schaffen, der ohne zylindrischen Gewindeabschnitt zum Bewegen des Nadelhalters gegenüber dem Brennerkörper auskommt.

Diese Aufgabe wird erfindungsgemäß durch die im kennzeichnenden Teil des Anspruchs 1 definierten Merkmale.

Der gegenseitige Gewindeeingriff von Nadelhalter und Brennerkörper lässt sich hier in vorteilhafter Weise infolge des im Bereich der Gewindeanordnung vorhandenen Konuswinkels bereits durch eine vergleichsweise geringe gegenseitige Verdrehung aufheben und umgekehrt, was die Handhabung bei der Montage sowie der Wartung und Instandhaltung sehr erleichtert. Ein weiterer Vorteil der erfindungsgemäßen Maßnahmen ist darin zu sehen, dass die nach Art einer Dichtgewindeanordnung zusammenwirkenden Konusgewinde nicht nur zu einer zuverlässigen gegenseitigen Abdichtung des Spalts zwischen Nadelhalter und Brennerkörper führen, sondern auch eine vergleichsweise große gegenseitige Kontaktfläche ergeben, was sich vorteilhaft auf den erzielbaren Wärmedurchgang auswirkt. Dies erleichtert die Abfuhr der von der Elektrodennadel auf den Nadelhalter übertragenen Wärme und führt dementsprechend zu einer langen Lebensdauer. Infolge der im Konusbereich erfolgenden gegenseitigen Verschraubung zwischen Nadelhalter und Brennerkörper ergibt sich auch eine sehr kompakte Bauweise. Der Nadelhalter ist fest mit einer rückwärtigen, das hintere Nadelende übergreifenden Brennerkappe verbunden bzw. einstückig hiermit ausgebildet, was die erforderliche Teilezahl reduzieren und die Montage erleichtern kann. Ein weiterer Vorteil ist darin zu sehen, dass die einstückig mit dem Nadelhalter ausgebildete bzw. fest hieran angebrachte Brennerkappe auch als Griff zum Anziehen bzw. Lösen der Gewindeverbindung fungieren kann, so dass zusätzliche Betätigungsorgane entfallen können. Mit den erfindungsgemäßen Maßnahmen werden daher die eingangs geschilderten Nachteile der bekannten Anordnungen vollständig vermieden und die vorstehend genannte Aufgabe auf höchst einfache und kostengünstige Weise gelöst.

Vorteilhafte Ausgestaltungen und zweckmäßige Fortbildungen der übergeordneten Maßnahmen sind in den Unteransprüchen angegeben. So können die Konusbereiche zweckmäßig nach vorne sich verjüngend bzw. verengend ausgebildet sein. Dies ermöglicht eine Einführung des Nadelhalters in den Brennerkörper von hinten und erleichtert dabei eine gegenseitige Abdichtung zwischen Nadelhalter und Brennerkörper. Außerdem ermöglicht dies eine schonende Handhabung der Elektrodennadel und erleichtert die Vermeidung einer von der Spitze der Elektrodennadel ausgehenden Verletzungsgefahr.

In weiterer Fortbildung kann der Nadelhalter einen im Bereich einer zylindrischen Führungsfläche vorgesehenen Dichtring aufweisen, der an einer zylindrischen Führungsfläche des Brennerkörpers anliegt. Hierdurch ergeben sich eine zuverlässige axiale Führung und Abdichtung.

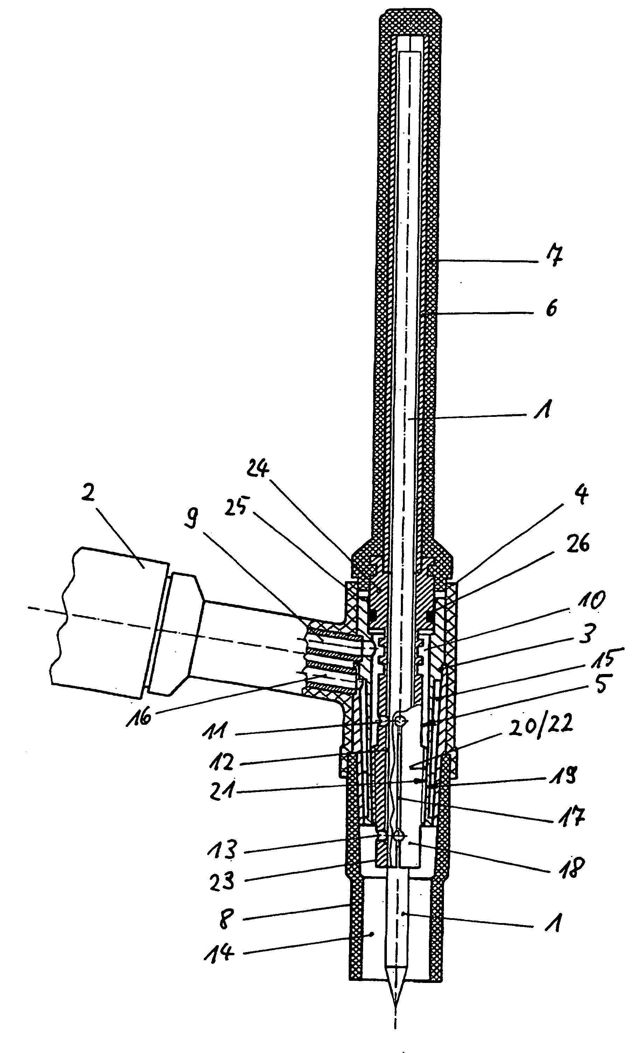

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

Die nachstehend beschriebene Zeichnung enthält einen Schnitt durch einen erfindungsgemäßen Brenner.

Die Erfindung kann bei allen zum Schweißen und/oder Schneiden Verwendung findenden Lichtbogenbrennern, wie WIG- oder Plasma-Brennern, Anwendung finden. Bei dem der Zeichnung zugrundeliegenden Brenner handelt es sich um einen WIG-Brenner, bei dem zwischen einer Elektrodennadel 1 und einem nicht näher dargestellten Werkstück ein Lichtbogen gezündet wird. Eine ähnliche Elektrodennadel ist auch bei Plasma-Brennern vorhanden, bei denen zwischen der Elektrodennadel und einer diese umfassenden Elektrodenhülse ein Pilotlichtbogen gezündet werden kann.

Der vorliegende Brenner enthält einen an einem Griff 2 befestigten, hier zweiteiligen, büchsenförmigen Brennerkörper 3, der von einer Isolierung 4 umfasst ist und in dem ein Nadelhalter 5 aufgenommen ist, der die ihn durchgreifende Elektrodennadel 1 durch Klemmwirkung hält. Der rückwärtige Bereich der Elektrodennadel 1 greift in eine Brennerkappe 6 ein, die eine an die Isolierung 4 des Brennerkörpers 3 anschließende Isolierung 7 aufweist. Die Brennerkappe 6 ist hier mit dem Nadelhalter 5 zu einem Bauteil zusammengefasst. Die Isolierung 7 ist mit einem Bund versehen, der in einen über das hintere Ende de Brennerkörpers 3 vorspringenden Kragen der Isolierung 4 des Brennerkörpers 3 eingreift.

Am unteren Ende des Brennerkörpers 3 ist eine rohrstutzenförmige Gasdüse 8 angebracht, welche die Elektrodennadel 1 mit Abstand umgreift. Diese ist im Nadelhalter 5 so positioniert, dass sie mit ihrer vorderen Spitze aus der Gasdüse 8 herausragt. Durch die Gasdüse 8 wird das der Arbeitsstelle zugeführte Schutzgas kanalisiert. Dieses wird über eine im Griff 2 vorgesehene Versorgungsleitung 9 einem zwischen Brennerkörper 3 und Nadelhalter 4 vorgesehenen Ringraum 10 zugeführt, der über radiale Bohrungen 11 mit einem zwischen Nadelhalter 5 und Elektrodennadel 1 vorgesehenen Ringraum 12 verbunden sein kann, der über vor dem vorderen Ende des Brennerkörpers 3 positionierte Radialbohrungen 13 mit dem Ringraum 14 zwischen Elektrodennadel 1 und Gasdüse 8 kommunizieren kann.

Im dargestellten Beispiel ist auch eine Wasserkühlung des Brennerkörpers 3 vorgesehen. Dieser ist hierzu mit einem zwischen seinen beiden Teilen angeordneten Ringraum 15 versehen, der über im Griff 2 angeordnete Leitungen 16 mit durchlaufendem Kühlwasser versorgbar ist.

Zur Bewerkstelligung der oben erwähnten Klemmwirkung zum Halten der Elektrodennadel 1 ist der von der Elektrodennadel 1 durchgriffene, büchsenförmige Nadelhalter 5 im Bereich seines vorderen Abschnitts mit axial verlaufenden Schlitzen 17 versehen, durch die in radialer Richtung entgegen ihrer Eigenelastizität bewegbare, schenkelartige Klemmsegmente 18 gebildet werden, die in Klemmeingriff mit der Elektrodennadel 1 bringbar sind. Im dargestellten Beispiel reichen die Schlitze 17 bis in den Bereich des mit Gas beaufschlagbaren Ringraums 10 und werden an ihrem hinteren Ende durch jeweils eine Radialbohrung 11 begrenzt. Die Schlitze 17 fungieren dabei vorteilhaft gleichzeitig als Gaskanäle, durch die das Gas dem Ringraum 14 zwischen Elektrodennadel 1 und Gasdüse 8 zuführbar ist. Der Ringraum 12 kann dabei einen vergleichsweise geringen Querschnitt aufweisen oder unter Umständen ganz entfallen.

Zur Bewerkstelligung der Radialbewegung der Klemmsegmente 18 ist eine Konusanordnung mit durch axiale Bewegung des Nadelhalters 5 gegenüber dem Brennerkörper 3 in gegenseitigen Eingriff bringbaren Konusen vorgesehen. Der Nadelhalter 5 besitzt einen umfangsseitigen, nach vorne sich verjüngenden Konusbereich 19 mit konischem Außengewinde 20. Der Brennerkörper 3 ist mit einem zugeordneten, nach vorne sich sitzartig verengenden Gegenkonusbereich 21 mit konischem Innengewinde 22 versehen, mit dem das konische Außengewinde 20 des Nadelhalters 5 in Gewindeeingriff bringbar ist. Der Nadelhalter 5 besitzt im dargestellten Beispiel einen an das vordere Ende seines Konusbereichs 20 sich anschließenden, vorderen Zylinderzapfen 23, der die vorderen Radialbohrungen 13 enthält und über den die Schlitze 17 durchgehen.

Der die Elektrodennadel 1 bereits enthaltende Nadelhalter 5 kann hier von hinten, in der Zeichnung von oben, in den oben offenen, büchsenförmigen Brennerkörper 3 eingeführt werden, bis die gegenseitigen Konusgewinde 20, 22 in gegenseitige Anlage kommen. Anschließend wird durch gegenseitige Verdrehung der Gewindeeingriff bewerkstelligt, wobei der umfangsseitige Konusbereich 19 des Nadelhalters 5 in den sitzförmigen Konusbereich 21 des Brennerkörpers hineingezogen und dementsprechend die Klemmsegmente nach radial innen an die Elektrodennadel 1 angepresst werden. Infolge der Verwendung von Konusgewinden genügt dabei in vorteilhafter Weise bereits eine vergleichsweise geringe gegenseitige Verdrehung, um die gewünschte Klemmwirkung herbeizuführen bzw. aufzuheben. Die einstückig mit dem Nadelhalter 5 ausgebildete Brennerkappe 6 kann dabei als Griff zum Ein- bzw. Ausschrauben des Nadelhalters 5 fungieren.

Der Nadelhalter 5 ist rückwärtig mit einem Führungszylinder 24 versehen, der im Eingriff mit einem ihn umfassenden Kragen 25 des Brennergehäuses 3 ist, was eine zuverlässige Führung ergibt und dementsprechend einen exakten Gewindeeingriff erleichtert. Im Bereich des Führungszylinders 24 ist ein umlaufender Dichtring 26 vorgesehen, der mit der Führungsfläche des Kragens 25 zusammenwirkt. Auf diese Weise ergibt sich eine Schiebedichtung, die eine axiale Bewegung und Drehung des Nadelhalters 5 gegenüber dem Brennerkörper 3 zuläßt. Dasselbe gilt für den Anschluss der Isolierung 7 der Brennerkappe 6 an die Isolierung 4 des Brennerkörpers 3.

Die Gewindegänge der Konusgewinde 20 bzw. 22 besitzen zweckmäßig dachförmig gegeneinander geneigte Flanken. Hierzu können die Konusgewinde 20 bzw. 22 zweckmäßig als Spitzgewinde ausgebildet sein. Hierdurch wird erreicht, dass bei entsprechendem Gewindeanzug eine beidseitige gegenseitige Anlage der ineinander eingreifenden Gewindegänge erreicht wird, was eine sehr große, gegenseitige Kontaktfläche ergibt und dementsprechend eine gute Wärmedurchleitung ermöglicht. Die von der Elektrodennadel 1 auf den Nadelhalter 5 übertragene Wärme kann somit zuverlässig an das Kühlwasser abgegeben werden. Der dem Kühlwasser zugeordneten Ringraum 15 erstreckt sich dementsprechend vorteilhaft bis in den unteren, dem sitzförmigen Konusbereich 21 zugeordneten Endbereich des Brennerkörpers 3.

## Patentansprüche

1. Brenner zum Schweißen und/oder Schneiden mit einer Elektrodennadel (1), die einen in einem Brennerkörper (3) aufnehmbaren und hiermit in Gewindeeingriff bringbaren Nadelhalter (5) durchgreift, der einen umfangsseitigen, mit einem zugeordneten Gegenkonusbereich (21) des Brennerkörpers (3) zum Eingriff bringbaren Konusbereich (19) aufweist und mit durch Schlitze (17) gebildeten Klemmsegmenten (10) versehen ist, die durch die Keilwirkung der miteinander zusammenwirkenden Konusbereiche (19, 21) in Klemmeingriff mit der Elektrodennadel (1) bringbar sind, deren rückwärts aus dem Brennerköprer (3) herausragendes Ende in einer Brennerkappe (6) aufnehmbar ist, **dadurch gekennzeichnet, dass** der umfangsseitige Konusbereich (19) des Nadelhalters (5) mit einem konischen Außengewinde (20) und der Gegenkonusbereich (21) des Brennerkörpers (3) mit einem konischen Innengewinde (22) versehen sind, mit welchem das konische Außengewinde (20) des Nadelhalters (5) in Gewindeeingriff bringbar ist, und **dass** der Nadelhalter (5) mit der Brennerkappe (6) fest verbunden ist.

2. Brenner nach Anspruch 1, **dadurch gekennzeichnet, dass** die konischen Gewinde (20, 22) als Spitzgewinde ausgebildet sind.

3. Brenner nach einem der vorhergehenden Ansprüche, **dadurch gekennzeichnet, dass** die Konusbereiche (19, 21) nach vorne sich verjüngend bzw. verengend ausgebildet sind.

4. Brenner nach einem der vorhergehenden Ansprüche, **dadurch gekennzeichnet, dass** der Nadelhalter (5) einen an das verjüngte Ende seines Konusbereichs (19) sich anschließenden, vorderen Zylinderzapfen (23) aufweist, über den die Schlitze (17) durchgehen.

5. Brenner nach einem der vorhergehenden Ansprüche, **dadurch gekennzeichnet, dass** der Nadelhalter (5) einstückig mit einer das rückwärts aus dem Brennerkörper (3) herausragende Ende der Elektrodennadel (1) übergreifenden Brennerkappe (6) ausgebildet ist.

6. Brenner nach Anspruch 5, **dadurch gekennzeichnet, dass** die Isolierung (7) der Brennerkappe (6) am vorderen Ende einen Bund aufweist, der drehbar und axial verschieblich in einen rückwärtigen Kragen der Isolierung (4) des Brennerkörpers (3) eingreift.

7. Brenner nach einem der vorhergehenden Ansprüche, **dadurch gekennzeichnet, dass** der Brennerkörper (3) rückwärtig mit einem Führungskragen (25) versehen ist, in den ein Führungszylinder (24) des Nadelhalters (5) drehbar und axial verschieblich eingreift.

8. Brenner nach Anspruch 7, **dadurch gekennzeichnet, dass** der Nadelhalter (5) gegenüber dem Brennerkörper (3) mittels einer rückwärtigen Schiebedichtung abgedichtet ist.

9. Brenner nach Anspruch 7 und 8, **dadurch gekennzeichnet, dass** der Führungszylinder (24) mit einem umlaufenden Dichtring (26) versehen ist, der mit der Führungsfläche des Führungskragens (25) zusammenwirkt.

10. Brenner nach einem der vorhergehenden Ansprüche, **dadurch gekennzeichnet, dass** der Brennerkörper (3) eine an eine Kühlwasserversorgungseinrichtung angeschlossene Kühlkammer (15) aufweist, die vorzugsweise bis in den vorderen, dem Konusbereich (21) zugeordneten Abschnitt des Brennerkörpers (3) reicht.

## Claims

1. A torch for welding and/or flame cutting having an electrode (1) extending through an electrode holder (5) which is receivable by a torch body (3) and engageable therewith by a thread, which electrode holder (5) along its circumference has a tapered area (19) engageable with an associated opposed tapered area (21) of the torch body (3) and is provided with clamping segments (10) formed by slots (17) which can be brought into clamping connection with the electrode (1) due to the wedge-effect of the interacting tapered areas (19, 21), with the end of said electrode (1) projecting from the rear side of the torch body (3) being receivable by a torch cap (6), **characterised in that** the tapered area (19) at the circumference of the electrode holder (5) is provided with a tapered external thread (20) and the opposed tapered area (21) of the torch body (3) is provided with a tapered internal thread (22) by which arrangement the tapered external thread (20) of the electrode holder (5) can be brought into thread engagement with the tapered internal thread (22), and that the electrode holder (5) is firmly connected with the torch cap (6).

2. A torch according to Claim 1, **characterised in that** the tapered threads (20, 22) are designed as V threads.

3. A torch according to any of the preceding Claims, **characterised in that** the tapered areas (19, 21) are designed in a shape tapering, that is to say narrowing, towards the front end of the unit.

4. A torch according to any of the preceding Claims, **characterised in that** the electrode holder (5) is provided with a cylindrical nose (23) adjacent to the front end of its tapered area (19), over which nose (23) the slots (17) extend.

5. A torch according to any of the preceding Claims, **characterised in that** the electrode holder (5) is designed integral with a torch cap (6) which extends beyond the end of the electrode (1) projecting from the rear of the torch body (3).

6. A torch according to claim 5, **characterised in that** the insulation (7) of the torch cap (6) is provided with a collar at its front end which is rotatable and axially movable and engages a rear collar of the insulation (4) of the torch body (3).

7. A torch according to any of the preceding Claims, **characterised in that** the torch body (3) is provided at its rear end with a guiding collar (25) which is engaged by a guiding cylinder (24) of the electrode holder (5) in a rotatable and axially movable manner.

8. A torch according to Claim 7, **characterised in that** the electrode holder (5) is tightly sealed against the torch body (3) by a rear sliding seal.

9. A torch according to Claims 7 and 8, **characterised in that** the guiding cylinder (24) is provided with a circumferential sealing ring (26) interacting with the guiding surface of the guiding collar (25).

10. A torch according to any of the preceding Claims, **characterised in that** the torch body (3) is provided with a cooling chamber (15) connected with a cooling water supply device, which preferably extends to the front section of the torch body (3) associated with the tapered area (21).

## Revendications

1. Torche à souder et/ou à découper comprenant une aiguille formant électrode (1) qui passe à travers un porte-aiguille (5) qui peut être reçu dans un corps de torche (3) et peut être vissé dans celui-ci, ledit porte-aiguille présentant une zone conique (19) circonférentielle laquelle peut être mise en prise avec une contre-zone conique associée (21) dudit corps de torche (3) et étant pourvu de segments de serrage (10) formés par des fentes (17), qui, en raison de l'effet de calage des zones coniques (19, 21) agissant de concert l'une avec l'autre, peuvent être mis en prise à serrage avec l'aiguille formant électrode (1) dont l'extrémité qui fait saillie à l'arrière dudit corps de torche (3) peut être reçue dans un capuchon de torche (6), **caractérisée par le fait que** la zone conique circonférentielle (19) du porte-aiguille (5) est pourvue d'un filet extérieur conique (20) et que la contre-zone conique (21) du corps de torche (3) est pourvue d'un filet intérieur conique (22) dans lequel le filet extérieur conique (20) du porte-aiguille (5) peut être vissé, et que ledit porte-aiguille (5) est solidaire du capuchon de torche (6).

2. Torche selon la revendication 1, **caractérisée par le fait que** les filets coniques (20, 22) sont réalisés comme filets triangulaires.

3. Torche selon l'une des revendications précédentes, **caractérisée par le fait que** les zones coniques (19, 21) sont réalisées de manière à se rétrécir ou bien se resserrer vers l'avant.

4. Torche selon l'une des revendications précédentes, **caractérisée par le fait que** le porte-aiguille (5) présente un tenon cylindrique avant (23) qui est contigu à l'extrémité rétrécie de sa zone conique (19) et sur lequel les fentes (17) s'étendent.

5. Torche selon l'une des revendications précédentes, **caractérisée par le fait que** le porte-aiguille (5) est réalisé en une pièce avec le capuchon (6) qui recouvre l'extrémité de l'aiguille formant électrode (1), qui fait saillie à l'arrière dudit corps de torche (3).

6. Torche selon la revendication 5, **caractérisée par le fait que** l'isolation (7) dudit capuchon de torche (6) présente un collet à l'extrémité avant lequel se prend dans une collerette arrière de l'isolation (4) du corps de torche (3) de manière à pouvoir tourner et à être axialement déplaçable.

7. Torche selon l'une des revendications précédentes, **caractérisée par le fait que** le corps de torche (3) est pourvu à l'arrière d'une collerette de guidage (25) dans laquelle un cylindre de guidage (24) du porte-aiguille (5) se prend de manière à pouvoir tourner et à être axialement déplaçable.

8. Torche selon la revendication 7, **caractérisée par le fait que** le porte-aiguille (5) est rendu étanche par rapport au corps de torche (3) par l'intermédiaire d'un joint d'étanchéité coulissant arrière.

9. Torche selon la revendication 7 et 8, **caractérisée par le fait que** le cylindre de guidage (24) est pourvu d'une bague d'étanchéité (26) s'étendant tout autour qui agit de concert avec la surface de guidage de ladite collerette de guidage (25).

10. Torche selon l'une des revendications précédentes, **caractérisée par le fait que** le corps de torche (3) présente une chambre de refroidissement (15) qui est raccordée à un dispositif d'alimentation en eau de refroidissement et qui, de préférence, s'étend jusque dans la section avant du corps de torche (3) laquelle est associée à la zone conique (21).
